# EUROPEAN PATENT SPECIFICATION

(11) **EP 3 297 379 B1**
(45) Date of publication and mention of the grant of the patent: **29.09.2021**
(21) Application number: 16795783.6
(22) Date of filing: 25.04.2016
(51) Int. Cl.: H04W 72/12, H04W 40/22, H04W 88/04

(54) **RESOURCE COORDINATION METHOD AND DEVICE**
VERFAHREN UND VORRICHTUNG ZUR RESSOURCENKOORDINATION
PROCÉDÉ ET DISPOSITIF DE COORDINATION DE RESSOURCES

(30) Priority: 15.05.2015 CN 201510251478
(43) Date of publication of application: 21.03.2018
(73) Proprietor: Datang Mobile Communications Equipment Co., Ltd., Beijing 100085 (CN)
(72) Inventor: ZHAO, Rui, Beijing 100191 (CN)
(74) Representative: Maiwald Patent- und Rechtsanwaltsgesellschaft mbH
(86) International application number: PCT/CN2016/080142
(87) International publication number: WO 2016/184296

(56) References cited:
- WO-A1-2014/180517
- CN-A- 102 907 159
- CN-A- 103 379 648
- CN-A- 103 875 297
- US-A1- 2013 034 043
- ZTE: "Scheduling-based D2D Communication Resource Allocation", 3GPP DRAFT; R1-141427 ENB SCHEDULED D2D COMM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Shenzhen, China; 20140331 - 20140404 30 March 2014 (2014-03-30), XP050787097, Retrieved from the Internet: URL:http://www.3gpp.org/ftp/Meetings_3GPP_ SYNC/RAN1/Docs/ [retrieved on 2014-03-30]
- GENERAL DYNAMICS: "Resource Pool Configuration for D2D Communication", 3GPP DRAFT; R2-141609 RESOURCE POOL CONFIGURATION FOR D2D COMMUNICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Valencia, Spain; 20140331 - 20140404 22 March 2014 (2014-03-22), XP050792757, Retrieved from the Internet: URL:http://www.3gpp.org/ftp/Meetings_3GPP_ SYNC/RAN2/Docs/ [retrieved on 2014-03-22]
- CATT: "Resource Allocation for UE-to-Network relay operation", 3GPP DRAFT; R1-152574, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 24 May 2015 (2015-05-24), XP050971457, Retrieved from the Internet: URL:http://www.3gpp.org/ftp/Meetings_3GPP_ SYNC/RAN1/Docs/ [retrieved on 2015-05-24]
- CATR: "Discussions on L3-based UE-to-Network Relays communication procedure", 3GPP DRAFT; R2-153488, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Beijing, China; 20150824 - 20150828 23 August 2015 (2015-08-23), XP051040222, Retrieved from the Internet: URL:http://www.3gpp.org/ftp/Meetings_3GPP_ SYNC/RAN2/Docs/ [retrieved on 2015-08-23]
- ZTE: "Discussions on D2D UE-to-network Relay", 3GPP DRAFT; R1-151725 D2D NETWORK-TO-UE RELAY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Belgrade, Serbia; 20150420 - 20150424 19 April 2015 (2015-04-19), XP050934586, Retrieved from the Internet: URL:http://www.3gpp.org/ftp/Meetings_3GPP_ SYNC/RAN1/Docs/ [retrieved on 2015-04-19]
- INTEL CORPORATION: "Discussion on UE-to-NW Relay Implementation Aspects", 3GPP DRAFT; R1-151442 INTEL - L3 RELAY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Belgrade, Serbia; 20150420 - 20150424 19 April 2015 (2015-04-19), XP050934317, Retrieved from the Internet: URL:http://www.3gpp.org/ftp/Meetings_3GPP_ SYNC/RAN1/Docs/ [retrieved on 2015-04-19]

## Description

### TECHNICAL FIELD

The present disclosure relates to the field of wireless communication technology, in particular to a resource coordination method and a resource coordination device.

### BACKGROUND

For Device-to-Device (D2D) communication defined in Release 12 (Rel-12), the following deigns are given. Data transmission is performed in a Single Carrier-Frequency Division Multiplexing (SC-FDM) manner for the D2D communication, and uplink transmission for a cellular system and D2D transmission are not allowed to be performed simultaneously within one subframe. In addition, due to the existence of duplex separation, on an identical carrier, no data can be transmitted during the data reception, and no data can be received during the data transmission.

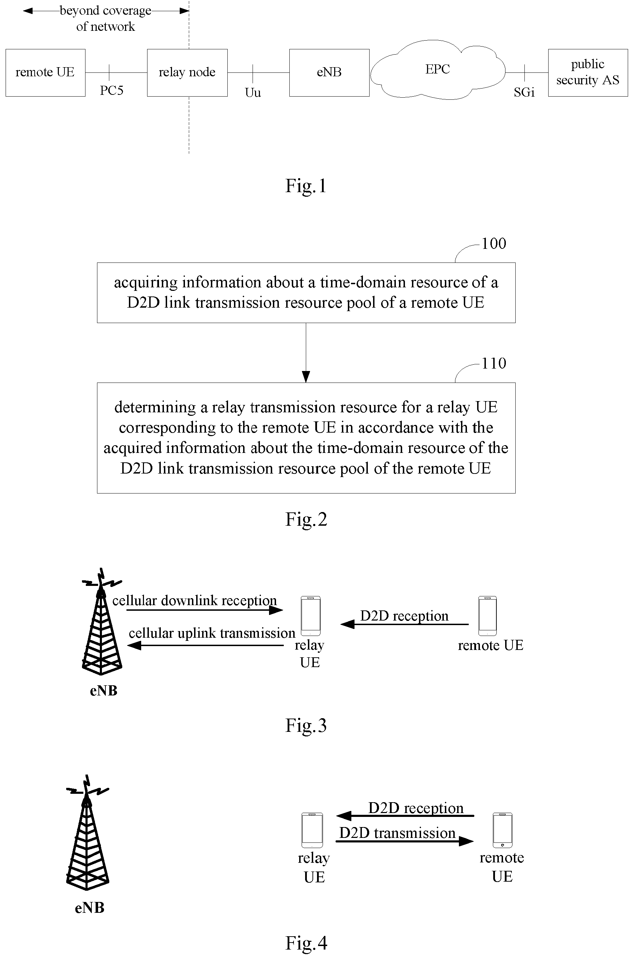

For D2D communication enhancement in 3^{rd}-Generation Partnership Project (3GPP) Long Term Evolution-Advanced (LTE-A) Release 13 (Rel-13), a communication mode where a User Equipment (UE)-to-network relay function needs to be supported has be proposed, as shown in Fig.1. A relay node is a UE capable of supporting the D2D communication.

Due to the design of the D2D communication in Rel-12, during the UE-to-network relay procedure, there may exist resource conflict between relay

transmission of a relay UE and D2D link transmission of a UE located out of a coverage range (i.e., a remote UE). Here, as shown in Fig.1, the remote UE refers to a UE located out of the coverage range of a network side device (e.g., an evolved Node B (eNB)).

However, there is currently no scheme to reduce the possibility of resource conflict or prevent the occurrence of the resource conflict between the relay transmission of the relay UE and the D2D link reception.

ZTE ("Scheduling-based D2D Communication Resource Allocation", 3GPP DRAFT; R1-141427 ENB SCHEDULED D2D COMM, 3RD GENE(3GPP), MOBILE COMPETENCE CENTRE; 650, ROUTE DES LUCIOL CEDEX; FRANCE) discloses Scheduling-based D2D Communication Resource Allocation. Specially, it furthers discloses that control channel resource pool should be independent from data channel resource pool for Model 1, and a pre-defined pattern with control channel and data channel is preferred in Model 2.

GENERAL DYNAMICS ("Resource Pool Configuration for D2D Communication", 3GPP DRAFT; R2-141609 RESOURCE POOL CONFIGURATION FOR GENERATION PARTNERSHIP PROJECT(3GPP), MOBILE COMPETE LUCIOLES; F-06921 SOPHIA-ANTIPOLIS CEDEX) discloses Resource Pool Configuration for D2D Communication. Specially, it furthers discloses that effective way of configuring resource pools for Scheduling Assignments and data for D2D communication in the three coverage areas: in coverage, out of coverage and edge of coverage.

US 2013/034043 A1 describes backhaul resource allocation for communication between an eNB and a relay node. INTEL CORPORATION ("Discussion on UE-to-NW Relay Implementation Aspects", 3GPP DRAFT; R1-151442 INTEL - L3 RELAY, 3RD GENERATION PARTNERSHIP PROJECT (3GPP), MOBILE COMPETENCE CENTRE; 650, ROUTE DES LUCIOLES; F-06921 SOPHIAANTIPOLIS CEDEX; FRANCE, vol. RAN WG1, no. Belgrade, Serbia; 20150420 - 20150424 19 April 2015 (2015-04-19)) discusses PHY layer aspects to support L3-based UE-to-Network relays (UE-to-NW).

CATR("Discussion on L3-based UE-to-Network Relays communication procedure", 3GPP DRAFT; R2-153488, 3RD GENERATION PARTNERSHIP PROJECT CENTRE; 650, ROUTE DES LUCIOLES; F-06921 SOPHIA-ANTIPOLIS) discloses Discussion on L3-based UE-to-Network Relays communication procedure. Specially, it furthers discloses that general and detailed procedures about the UE-to-Network Relay communication.

ZTE ("Discussions on D2D UE-to-network Relay", 3GPP DRAFT; R1-151725 D2D NETWORK-TO-UE RELAY, 3RD GENE(3GPP), MOBILE COMPETENCE CENTRE; 650, ROUTE DES LUCIOL CEDEX; FRANCE) discloses Discussions on D2D UE-to-network Relay. Specially, it furthers discloses scenarios and operation procedure of UE-to-network Relay.

### SUMMARY

The present invention has solved the afore described problem as defined in the attached claims. Further embodiments are provided in the dependent claims.

### (3) Beneficial effect

According to the embodiments of the present disclosure, the base station acquires in advance the information about the time-domain resource of the D2D link transmission resource pool of the remote UE, so as to determine relay transmission resource for the relay UE in accordance with the information about the time-domain resource of the D2D link transmission resource pool of the remote UE. As a result, it is able to reduce the possibility of, and even prevent the occurrence of, a resource conflict between the relay transmission of the relay UE and the D2D link reception, thereby to improve the efficiency and reliability of the UE-to-network relay procedure.

### BRIEF DESCRIPTION OF THE DRAWINGS

In order to illustrate the technical solutions of the present disclosure or the related art in a clearer manner, the drawings desired for the present disclosure or the related art will be described hereinafter briefly. Obviously, the following drawings merely relate to some embodiments of the present disclosure, and based on these drawings, a person skilled in the art may obtain the other drawings without any creative effort.
Fig.1 is a schematic view showing network architecture for a UE-to-network relay procedure;
Fig.2 is a flow chart of a resource coordination method according to one embodiment of the present disclosure;
Fig.3 is a schematic view showing a scenario for cellular uplink transmission and D2D link reception of a relay UE according to one embodiment of the present disclosure;
Fig.4 is a schematic view showing a scenario for D2D link transmission and reception of the relay UE according to one embodiment of the present disclosure;
Fig.5 is a flow chart of another resource coordination method according to one embodiment of the present disclosure;
Fig.6 is a schematic view showing a resource coordination device according to one embodiment of the present disclosure;
Fig.7 is a schematic view showing a base station according to one embodiment of the present disclosure;
Fig.8 is a schematic view showing another resource coordination device according to one embodiment of the present disclosure; and
Fig.9 is a schematic view showing a UE according to one embodiment of the present disclosure.

### DETAILED DESCRIPTION

Unless otherwise defined, any technical or scientific term used herein shall have the common meaning understood by a person of ordinary skills. Such words as "first" and "second" used in the specification and claims are merely used to differentiate different components rather than to represent any order, number or importance. Similarly, such words as "one" or "one of' are merely used to represent the existence of at least one member, rather than to limit the number thereof. Such words as "connect" or "connected to" may include electrical connection, direct or indirect, rather than to be limited to physical or mechanical connection. Such words as "on", "under", "left" and "right" are merely used to represent relative position relationship, and when an absolute position of the object is changed, the relative position relationship will be changed too.

Before describing the technical solution of the present disclosure, resource pools involved in the embodiments of the present disclosure will be described hereinafter.

A D2D link transmission resource pool (or resource) of a relay UE, also called as relay UE D2D link Tx resource pool (or resource), refers to a D2D Tx resource pool (or resource) used by the relay UE for UE-to-network relay, i.e., a resource pool (or resource) used by the relay UE for transmitting a UE-to-network relay D2D link.

A D2D link transmission resource pool (or resource) of a remote UE, also called as remote UE D2D link Tx resource pool (or resource) or relay UE D2D link Rx resource pool (or resource), refers to a D2D Tx resource pool (or resource) used by the remote UE for UE-to-network relay, i.e., a resource pool (or resource) used by the remote UE for transmitting a UE-to-network relay D2D link, or a resource pool (or resource) used by the relay UE for receiving the UE-to-network relay D2D link.

A preconfigured D2D resource pool of the remote UE includes a D2D discovery resource pool (including a reception resource pool and a transmission resource pool) of the remote UE, and a D2D communication resource pool (including a reception resource pool and a transmission resource pool) of the remote UE.

A relay transmission resource is used for the UE-to-network relay transmission of the relay UE, and it may refer to a cellular uplink resource used by the relay UE for the UE-to-network relay, or a D2D link transmission resource (or resource pool) used by the relay UE for the UE-to-network relay.

The present disclosure will be described hereinafter in conjunction with the drawings and embodiments.

The present disclosure provides in some embodiments a resource coordination method at a base station side which, as shown in Fig.2, includes the following steps.

Step 100: acquiring information about a time-domain resource of a D2D link transmission resource pool of a remote UE. In the case that a time domain is represented by subframes, the information about the time-domain resource may be represented by subframe information.

Step 110: determining a relay transmission resource for a relay UE corresponding to the remote UE in accordance with the acquired information about the time-domain resource of the D2D link transmission resource pool of the remote UE. Here, the remote UE refers to a UE located out of a coverage of a base station (e.g., eNB).

In the embodiments of the present disclosure, after the acquisition of the information about the time-domain resource of the D2D link transmission resource pool of the remote UE, the relay transmission resource for the relay UE may be determined each time in accordance with the currently-acquired information about the time-domain resource of the D2D link transmission resource pool of the remote UE, as long as the D2D link transmission resource pool of the remote UE does not change.

Of course, the information about the time-domain resource of the D2D link transmission resource pool of the remote UE may also be acquired in the case of determining the relay transmission resource for the relay UE each time.

According to resource coordination method in the embodiments of the present disclosure, the base station acquires in advance the information about the time-domain resource of the D2D link transmission resource pool of the remote UE, so as to determine relay transmission resource for the relay UE in accordance with the information about the time-domain resource of the D2D link transmission resource pool of the remote UE. As a result, it is able to reduce the possibility of, and even prevent the occurrence of, a resource conflict between the relay transmission of the relay UE and the D2D link reception for the UE-to-network relay, thereby to improve the efficiency and reliability of the UE-to-network relay procedure.

In a scenario as shown in Fig.3, the cellular uplink (UL) transmission of the relay UE for UE-to-network relay (including the transmission of a Physical Uplink Shared Channel (PUSCH) and the transmission of Acknowledgement/ Negative-Acknowledgement (ACK/NACK) feedback) and the D2D link reception of the relay UE for the UE-to-network relay are performed in an identical subframe. At this time, due to the existence of duplex separation, it is impossible for the relay UE to perform the D2D link reception in the case of performing the cellular transmission.

Based on the scenario in Fig.3, the following schemes are provided so as to reduce the possibility of, and even prevent the occurrence of, the resource conflict between the cellular uplink transmission of the relay UE and the D2D link reception.

### Scheme 1 at the base station side

Step 110 may include, in the case that a cellular uplink resource needs to be scheduled for the relay UE, scheduling the cellular uplink resource for the relay UE in accordance with the acquired information about the time-domain resource of the D2D link transmission resource pool of the remote UE.

In the embodiments of the present disclosure, there may be various modes for scheduling the cellular uplink resource for the relay UE, and any scheduling mode capable of reducing the possibility of, and even preventing the occurrence of, the resource conflict between the cellular uplink transmission of the relay UE and the D2D link reception for the relay UE may be applied. For example, the cellular uplink resource scheduling for the relay UE may not overlap the D2D link transmission resource pool of the remote UE in a time domain, i.e. the cellular uplink resource scheduling for the relay UE and the D2D link transmission resource pool of the remote UE are staggered in a time domain. Also, the cellular uplink resource may be scheduled for the relay UE in accordance with the information about the time-domain resource in conjunction with any other information. For example, the cellular uplink transmission of the relay UE for the UE-to-nctwork relay, the D2D link transmission of the relay UE for the UE-to-network relay and the D2D link reception of the relay UE for the UE-to-network relay may be provided with different priorities. In the case that the cellular uplink transmission has the highest priority, a resource that overlaps the resource for the D2D reception of the relay UE for the UE-to-network relay in the time domain may be scheduled for the relay UE; otherwise, the resource may be scheduled for the relay UE in accordance with the acquired information about the time-domain resource in such a manner as not to overlap the resource for the D2D link reception of the relay UE for the UE-to-network relay as possible.

In a scenario as shown in Fig.4, the D2D link transmission of the relay UE and the D2D link reception of the relay UE are performed within an identical subframe. Due to the existence of duplex separation, there is also the resource conflict, so the remote UE and the relay UE cannot receive data from each other.

The following two schemes are provided so as to reduce the possibility of, and even prevent the occurrence of, the resource conflict between the D2D uplink transmission of the relay UE and the D2D link reception of the relay UE.

### Scheme 2 at the base station side

Step 110 may include, in the case that a D2D link transmission resource needs to be scheduled for the relay UE, scheduling the D2D link transmission resource for the relay UE in accordance with the acquired information about the time-domain resource of the D2D link transmission resource pool of the remote UE.

In the embodiments of the present disclosure, there may be various modes for scheduling the D2D link transmission resource for the relay UE, and any scheduling mode capable of reducing the possibility of, and even preventing the occurrence of, the resource conflict between the D2D link transmission and the D2D link reception of the relay UE may be applied. Preferably, the relay transmission resource scheduled for the relay UE may not overlap the relay transmission resource pool of the remote UE in the time domain. For another example, the cellular uplink transmission of the relay UE for the UE-to-network relay, the D2D link transmission of the relay UE for the UE-to-network relay and the D2D link reception of the relay UE for the UE-to-nctwork relay may be provided with different priorities. In the case that the D2D link transmission of the relay UE for the UE-to-network relay has the highest priority, a resource that overlaps the resource for the D2D reception of the relay UE for the UE-to-network relay in the time domain may be scheduled for the relay UE.

According to this scheme in the embodiments of the present disclosure, the base station acquires in advance the information about the time-domain resource of the D2D link transmission resource pool of the remote UE, so as to schedule D2D link transmission resource for the relay UE in accordance with the information about the time-domain resource of the D2D link transmission resource pool of the remote UE. As a result, it is able to reduce the possibility of, and even prevent the occurrence of, a resource conflict between the D2D link transmission of the relay UE and the D2D link reception of the relay UE.

### Scheme 3 at the base station side

Step 110 may include configuring the D2D link transmission resource pool for the relay UE in accordance with the acquired information about the time-domain resource of the D2D link transmission resource pool of the remote UE, and notifying a configuration of the D2D link transmission resource pool to the relay UE.

There may be various modes for configuring the D2D link transmission resource pool for the relay UE, and any configuring mode capable of reducing the possibility of, and even preventing the occurrence of, the resource conflict between the D2D link transmission and the D2D link reception of the relay UE may be applied.

For example, the D2D link transmission resource pool configured for the relay UE may completely not overlap (i.e. may be orthogonal to) the D2D link transmission resource pool of the remote UE in the time domain. At this time, in the case that the relay UE selects any resource in the D2D link transmission resource pool for the D2D link transmission, it is able to avoid the D2D link reception of the relay UE, so as to prevent the occurrence of the resource conflict between the D2D link transmission and the D2D link reception.

For another example, the D2D link transmission resource pool configured for the relay UE may completely not overlap the D2D link transmission resource pool of the remote UE in the time domain. In this case, preferably, the relay UE also needs to acquire the time-domain resource of the D2D link transmission resource pool of the remote UE, so as to reduce the possibility of, or even prevent the occurrence of, the conflict resource between the D2D link transmission and the D2D link reception in the case of selecting the D2D link transmission resource.

According to this scheme in the embodiments of the present disclosure, the base station acquires in advance the information about the time-domain resource of the D2D link transmission resource pool of the remote UE, so as to configure the D2D link transmission resource pool for the relay UE in accordance with the information about the time-domain resource of the D2D link transmission resource pool of the remote UE. As a result, it is able to reduce the possibility of, and even prevent the occurrence of, a resource conflict between the D2D link transmission of the relay UE and the D2D link reception of the relay UE.

In the embodiments of the present disclosure, there may be various modes for acquiring the information about the time-domain resource of the D2D link transmission resource pool of the remote UE, and some of them will be described hereinafter.

Mode 1: the information about the time-domain resource of the D2D link transmission resource pool of the remote UE may be acquired in a predefined mode.

In this mode, the understanding of the base station on the predefined information about the time-domain resource of the D2D link transmission resource pool of the remote UE may be identical to the understanding of the remote UE on the predefined information about the time-domain resource of the D2D link transmission resource pool of the remote UE, i.e., the time-domain resource of the D2D link transmission resource pool of the remote UE determined by the base station in accordance with the predefined information may be identical to that determined by the remote UE in accordance with the predefined information.

During the implementation, the base station may determine a complete configuration, a time-frequency resource configuration or the like of the D2D link transmission resource pool of the remote UE in accordance with a predefined D2D link transmission resource pool of the remote UE, so as to acquire the information about the time-domain resource.

The predefined mode will not be particularly defined herein. In a possible embodiment of the present disclosure, through the predefined mode, at least one of preconfigured D2 communication resource pools of the remote UE and/or at least one of preconfigured D2D discovery resource pools may be configured as the D2D link transmission resource pool of the remote UE.

Mode 2: the information about the time-domain resource of the D2D Link transmission resource pool of the remote UE may be acquired in a mode of reporting by the relay UE.

During the implementation, the relay UE may report the complete configuration, the time-frequency resource or the like of the D2D link transmission resource pool of the remote UE, and correspondingly, the base station may acquire the information about the time-domain resource therefrom.

Mode 3: the D2D link transmission resource pool may be configured for the remote UE, and it may at least include the time-domain resource. Correspondingly, the relay UE may notify to the remote UE the D2D link transmission resource pool configured for the remote UE. The base station has configured the D2D link transmission resource pool for the remote UE, so it may definitely acquire the information about the time-domain resource of the D2D link transmission resource pool of the remote UE.

In mode 3, the base station may configure the D2D link transmission resource pool for one remote UE or a set of remote UEs.

Mode 3 may be implemented in the following three ways.

In a first way A, at least one of the preconfigured D2D communication resource pools and/or at least one of the preconfigured D2D discovery resource pools of the remote UE may be configured as the D2D link transmission resource pool of the remote UE. Correspondingly, the relay UE may notify to the remote UE identification information about the preconfigured D2D communication resource pools and/or the preconfigured D2D discovery resource pools of the remote UE. Of course, the relay UE may also notify configuration information to the remote UE.

In a second way B, the base station may configure a complete D2D link transmission resource pool for the remote UE, and correspondingly, the relay UE may transmit to the remote UE complete information about a complete configuration of the D2D link transmission resource pool of the remote UE.

In a third way C, the base station may configure a part of parameters of the D2D link transmission resource pool for the remote UE (i.e., at least configure the time-domain resource for the remote UE), and correspondingly, the relay UE may transmit a part of the configuration parameters of the D2D link transmission resource pool of the remote UE to the remote UE.

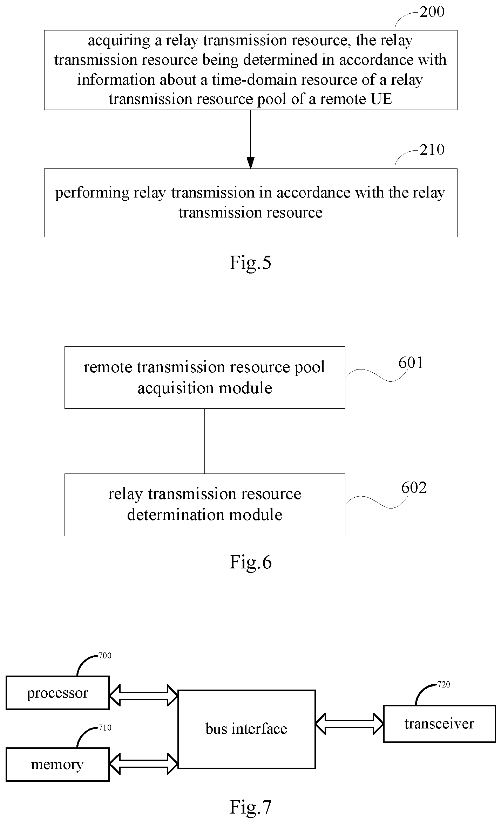

The present disclosure further provides in some embodiments a resource coordination method at a relay UE side which, as shown in Fig.5, includes: Step 200 of acquiring a relay transmission resource, the relay transmission resource being determined in accordance with information about a time-domain resource of a relay transmission resource pool of a remote UE; and Step 210 of performing relay transmission in accordance with the relay transmission resource.

According to the resource coordination method in the embodiments of the present disclosure, the relay transmission resource of the relay UE is determined in accordance with the information about the time-domain resource of the D2D link transmission resource pool of the remote UE. As a result, in the case of performing the relay transmission by the relay UE, it is able to reduce the possibility of, and even prevent the occurrence of, the resource conflict between the D2D link transmission and the D2D link reception of the relay UE, thereby to improve the efficiency and reliability of the UE-to-network relay procedure.

Corresponding to the above scheme 1 at the base station side, the scheme at the relay UE side may be as follows.

Step 200 may include acquiring a cellular uplink resource scheduled by the base station, and Step 210 may include performing the cellular uplink transmission on the cellular uplink resource scheduled by the base station.

Corresponding to the above scheme 2 at the base station side, the scheme at the relay UE side may be as follows.

Step 200 may include acquiring a D2D link transmission resource scheduled by the base station; the D2D link transmission is performed on the D2D link transmission resource scheduled by the base station.

Corresponding to the above scheme 3 at the base station side or a situation where the base station does not configure the relay transmission resource pool for the relay UE in accordance with the time-domain resource of the D2D link transmission resource pool of the remote UE, the scheme at the relay UE side may be as follows.

Step 200 may include selecting a resource from the D2D link transmission resource pool configured by the base station for itself in accordance with the acquired information about the time-domain resource of the D2D link transmission resource pool of the remote UE, and Step 210 may include performing the D2D link transmission on the selected resource.

There may be various modes for the relay UE to select the resource for the D2D link transmission, and any selection mode capable of reducing the possibility of, or even preventing the occurrence of, the resource conflict between the D2D link transmission and the D2D link reception of the relay UE may be applied. For example, the resource selected by the relay UE may not overlap the D2D link transmission resource of the remote UE in the time domain. To be specific, the relay UE may select the resource from its D2D link transmission resource pool that does not overlap the D2D link transmission resource pool of the remote UE in the time domain, or select an appropriate transmission subframe and an appropriate silent subframe from its D2D link transmission resource pool that partially overlaps the D2D link transmission resource pool of the remote UE in the time domain, so as to prevent the occurrence of the resource conflict between the D2D link transmission and the D2D link rcccption of the relay UE. In the case that the cellular uplink transmission of the relay UE for the UE-to-network relay, the D2D link transmission of the relay UE for the UE-to-network relay and the D2D link reception of the relay UE for the UE-to-network have been provided with different priorities and the D2D link transmission of the relay UE for the UE-to-network relay has the highest priority, the relay UE may select a subframe for the D2D link reception of UE-to-network relay as a transmission subframe.

According to the resource coordination method in the embodiments of the present disclosure, the relay UE acquires in advance the information about the time-domain resource of the D2D link transmission resource pool of the remote UE, so as to select the resource for the D2D link transmission in accordance with the information about the time-domain resource of the D2D link transmission resource pool of the remote UE. As a result, it is able to reduce the possibility of, and even prevent the occurrence of, the resource conflict between the D2D link transmission and the D2D link reception of the relay UE.

According to any one of the above embodiments of the relay UE, there may be various modes for the relay UE to acquire the time-domain resource of the D2D link transmission resource pool of the remote UE, and some of them will be described hereinafter.

Mode 1: the D2D link transmission resource pool may be determined for the remote UE, and the determined D2D link transmission resource pool of the remote UE may at least include the information about the time-domain resource.

Further, the determined D2D link transmission resource pool may be notified to the remote UE, and the time-domain resource of the D2D link transmission resource pool of the remote UE may be reported to the base station.

The relay UE may select at least one of the preconfigured transmission resource pools of the remote UE as the D2D link transmission resource pool of the remote UE; or determine the D2D link transmission resource pool of the remote UE in accordance with information about the relay UE, e.g., the D2D link transmission resource pool of the relay UE configured by the base station and any other measurement result monitored by the relay UE; or determine the D2D link transmission resource pool of the remote UE with reference to the above embodiments of the configuration of the D2D link transmission resource pool at the base station.

During the implementation, the above determination procedure may be, but not limited to be, implemented in the relay discovery procedure.

In the case that the relay discovery procedure is performed between the relay UE and the remote UE in Mode A, the relay UE may determine the D2D link transmission resource pool of the remote UE, and configuration information about the D2D link transmission resource pool of the remote UE may be carried in an announcement message.

In the case that the relay discovery procedure is performed between the relay UE and the remote UE in Mode B, the relay UE may send a response message to the remote UE upon the receipt of a request message from the remote UE, and the configuration information about the D2D link transmission resource pool determined for the remote UE may be carried in the response message. The relay UE may determine the D2D link transmission resources of the remote UEs before receiving the request message (not for a specific remote UE), or determine the D2D link transmission resource of the remote UE that has sent the request message upon the receipt of the request message (i.e., it may determine the D2D link transmission resource for the specific remote UE, or determine the same D2D link transmission resource for all the remote UEs).

Mode 2: a notification of the D2D link transmission resource pool configured for the remote UE may be acquired from the base station, and the information about the time-domain resource of the D2D link transmission resource pool of the remote UE may be acquired in accordance with the notification. After the acquisition of the notification, the notification may be further forwarded to the remote UE.

In the case that the base station needs to configure different D2D link transmission resource pools of the remote UEs for different relay UEs (i.e., different D2D link reception resource pools of the relay UEs), each relay UE may further notify identification information of the relay UE to the remote UE.

Mode 3: the information of the time-domain resource of the D2D link transmission resource pool of the remote UE may be acquired in a predefined mode.

In this mode, the understanding of the relay UE on the predefined information about the time-domain resource of the D2D link transmission resource pool of the remote UE may be identical to the understanding of the remote UE on the predefined information about the time-domain resource of the D2D link transmission resource pool of the remote UE, i.e., the time-domain resource of the D2D link transmission resource pool of the remote UE determined by the relay UE in accordance with the predefined information may be identical to that determined by the remote UE in accordance with the predefined information.

In the case that the base station also acquires the information about the time-domain resource of the D2D link transmission resource pool of the remote UE in the predefined mode, the understandings of the base station, the relay UE and the remote UE on the predefined information may be identical to each other.

In the case that the base station cannot acquire the information about the time-domain resource of the D2D link transmission resource pool of the remote UE in the predefined mode, the relay UE may report the information about the time-domain resource of the D2D link transmission resource pool of the remote UE to the base station after the acquisition of the information about the time-domain resource of the D2D link transmission source pool of the remote UE by the relay UE in the predefined mode.

Based on an identical inventive concept, the present disclosure further provides in some embodiments a resource coordination device at a base station side which, as shown in Fig.6, includes: a remote transmission resource pool acquisition module 601 configured to acquire information about a time-domain resource of a D2D link transmission resource pool of a remote UE; and a relay transmission resource determination module 602 configured to determine a relay transmission resource for a relay UE corresponding to the remote UE in accordance with the information about the time-domain resource.

According to the resource coordination device in the embodiments of the present disclosure, the base station acquires in advance the information about the time-domain resource of the D2D link transmission resource pool of the remote UE, so as to determine relay transmission resource for the relay UE in accordance with the information about the time-domain resource of the D2D link transmission resource pool of the remote UE. As a result, it is able to reduce the possibility of, and even prevent the occurrence of, a resource conflict between the relay transmission of the relay UE and the D2D link reception of the relay UE for the UE-to-network relay, thereby to improve the efficiency and reliability of the UE-to-network relay procedure.

In a possible embodiment of the present disclosure, the relay transmission resource determination module is further configured to, in the case that a cellular uplink resource needs to be scheduled for the relay UE, schedule the cellular uplink resource for the relay UE in accordance with the information about the time-domain resource.

In a possible embodiment of the present disclosure, the relay transmission resource determination module is further configured to, in the case that a D2D link transmission resource needs to be scheduled for the relay UE, schedule the D2D link transmission resource for the relay UE in accordance with the information about the time-domain resource.

In a possible embodiment of the present disclosure, the relay transmission resource determination module is further configured to configure the D2D link transmission resource pool for the relay UE in accordance with the information about the time-domain resource, and notify a configuration of the D2D link transmission resource pool to the relay UE.

In a possible embodiment of the present disclosure, the remote transmission resource pool acquisition module is further configured to: acquire the information about the time-domain resource of the D2D link transmission resource pool of the remote UE in a predefined mode; or acquire the information about the time-domain resource of the D2D link transmission resource pool of the remote UE in a mode of reporting by the relay UE; or configure the D2D link transmission resource pool for the remote UE, the D2D link transmission resource pool at least including the information about the time-domain resource.

Based on an identical inventive concept, the present disclosure further provides in some embodiments a base station which, as shown in Fig.7, includes a processor 700, a memory 710 and a transceiver 720. The memory 710 is configured to store therein data for the operation of the processor 700. The transceiver 720 is configured to receive and transmit data under the control of the processor 700. The processor 700 is configured to read a program stored in the memory 710, so as to: acquire information about a time-domain resource of a D2D link transmission resource pool of a remote UE; and determine a relay transmission resource for a relay UE corresponding to the remote UE in accordance with the information about the time-domain resource.

In Fig.7, bus architecture may include a number of buses and bridges connected to each other, so as to connect various circuits for one or more processors such as the processor 700 and one or more memories such as the memory 710. In addition, as is known in the art, the bus architecture may be used to connect any other circuits, such as a circuit for a peripheral device, a circuit for a voltage stabilizer and a power management circuit, which arc not particularly defined herein. Bus interfaces are provided, and the transceiver 720 may consist of more than one element, e.g., a transmitter and a receiver for communication with any other devices over a transmission medium. The processor 700 may take charge of managing the bus architecture as well general processings. The memory 710 may store therein data for the operation of the processor 700.

In a possible embodiment of the present disclosure, in the case of determining the relay transmission resource for the relay UE corresponding to the remote UE, the processor 700 is further configured to read the program stored in the memory 710, so as to, in the case that a cellular uplink resource needs to be scheduled for the relay UE, schedule the cellular uplink resource for the relay UE in accordance with the information about the time-domain resource.

In a possible embodiment of the present disclosure, in the case of determining the relay transmission resource for the relay UE corresponding to the remote UE, the processor 700 is further configured to read the program stored in the memory 710, so as to, in the case that a D2D link transmission resource needs to be scheduled for the relay UE, schedule the D2D link transmission resource for the relay UE in accordance with the information about the time-domain resource.

In a possible embodiment of the present disclosure, in the case of determining the relay transmission resource for the relay UE corresponding to the remote UE, the processor 700 is further configured to read the program stored in the memory 710, so as to configure the D2D link transmission resource pool for the relay UE in accordance with the information about the time-domain resource, and notify a configuration of the D2D link transmission resource pool to the relay UE.

In a possible embodiment of the present disclosure, in the case of acquiring the information about the time-domain resource of the D2D link transmission resource pool of the remote UE, the processor 700 is further configured to read the program stored in the memory 710, so as to: acquire the information about the time-domain resource of the D2D link transmission resource pool of the remote UE in a predefined mode; or acquire the information about the time-domain resource of the D2D link transmission resource pool of the remote UE in a mode of reporting by the relay UE; or configure the D2D link transmission resource pool for the remote UE, the D2D link transmission resource pool at least including the information about the time-domain resource.

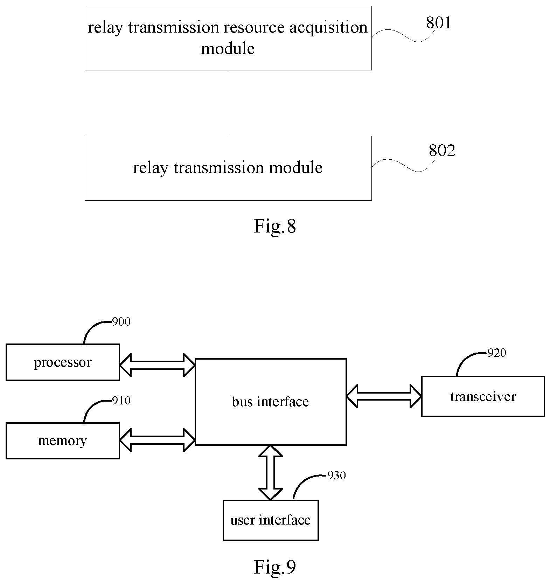

Based on an identical inventive concept, the present disclosure further provides in some embodiments a resource coordination device at a UE side which, as shown in Fig.8, includes: a relay transmission resource acquisition module 801 configured to acquire a relay transmission resource, the relay transmission resource being determined in accordance with information about a time-domain resource of a relay transmission resource pool of a remote UE; and a relay transmission module 802 configured to perform relay transmission through the relay transmission resource.

According to the resource coordination device in the embodiments of the present disclosure, the base station acquires in advance the information about the time-domain resource of the D2D link transmission resource pool of the remote UE, so as to determine relay transmission resource for the relay UE in accordance with the information about the time-domain resource of the D2D link transmission resource pool of the remote UE. As a result, it is able to reduce the possibility of, and even prevent the occurrence of, a resource conflict between the relay transmission of the relay UE and the D2D link reception of the relay UE for the UE-to-network relay, thereby to improve the efficiency and reliability of the UE-to-network relay procedure.

In a possible embodiment of the present disclosure, the relay transmission resource acquisition module is further configured to acquire a cellular uplink resource scheduled by a base station, and the relay transmission module is further configured to perform cellular uplink transmission on the cellular uplink resource scheduled by the base station.

In a possible embodiment of the present disclosure, the relay transmission resource acquisition module is further configured to acquire a D2D link transmission resource scheduled by the base station, and the relay transmission module is further configured to perform D2D link transmission on the D2D link transmission resource scheduled by the base station.

In a possible embodiment of the present disclosure, the relay transmission resource acquisition module is further configured to select a resource from a D2D link transmission resource pool configured by the base station for itself in accordance with acquired information about a time-domain resource of a D2D link transmission resource pool of the remote UE, and the relay transmission module is further configured to perform the D2D link transmission on the selected resource.

In a possible embodiment of the present disclosure, the resource coordination device further includes a remote transmission resource pool acquisition module configured to: determine the D2D link transmission resource pool for the remote UE, the D2D link transmission resource pool for the remote UE at least including the information about the time-domain resource; or acquire from the base station a notification of the D2D link transmission resource pool configured for the remote UE, and acquire the information about the time-domain resource of the D2D link transmission resource pool of the remote UE in accordance with the notification; or acquire the information about the time-domain resource of the D2D link transmission resource pool of the remote UE in a predefined mode.

In a possible embodiment of the present disclosure, the resource coordination device further includes a resource pool configuration notification module, configured to, after the remote transmission resource pool acquisition module has determined the D2D link transmission resource pool of the remote UE, notify the determined D2D link transmission resource pool to the remote UE, and report to the base station the time-domain resource of the D2D link transmission resource pool of the remote UE; or after the remote transmission resource pool acquisition module has acquired the information about the time-domain resource of the D2D link transmission resource pool of the remote UE in a predefined mode, report to the base station the time-domain resource of the D2D link transmission resource pool of the remote UE.

In a possible embodiment of the present disclosure, the resource coordination device further includes a notification forwarding module configured to, after the remote transmission resource pool acquisition module has acquired from the base station the notification of the D2D link transmission resource pool configured for the remote UE, forward the notification to the remote UE.

In a possible embodiment of the present disclosure, the notification forwarding module is further configured to notify identification information of the relay UE to the remote UE.

Based on an identical inventive concept, the present disclosure further provides in some embodiments a UE which, as shown in Fig.9, includes a processor 900, a memory 910 and a transceiver 920. The memory 910 is configured to store therein data for the operation of the processor 900. The transceiver 920 is configured to receive and transmit data under the control of the processor 900. In the case that the UE is a relay UE, the processor 900 is configured to read a program stored in the memory 910, so as to: acquire a relay transmission resource, the relay transmission resource being determined in accordance with information about a time-domain resource of a relay transmission resource pool of a remote UE; and perform relay transmission through the relay transmission resource.

In Fig.9, bus architecture may include a number of buses and bridges connected to each other, so as to connect various circuits for one or more processors such as the processor 900 and one or more memories such as the memory 910. In addition, as is known in the art, the bus architecture may be used to connect any other circuits, such as a circuit for a peripheral device, a circuit for a voltage stabilizer and a power management circuit, which are not particularly defined herein.. Bus interfaces are provided, and the transceiver 920 may consist of a plurality of elements, i.e., a transmitter and a receiver for communication with any other devices over a transmission medium. With respect to different UEs, a user interface 930 may also be provided for devices which are to be arranged inside or outside the UE, and these devices may include but not limited to a keypad, a display, a speaker, a microphone and a joystick. The processor 900 may take charge of managing the bus architecture as well as general processings. The memory 910 may store therein data for the operation of the processor 900.

In a possible embodiment of the present disclosure, the processor 900 is further configured to read the program stored in the memory 910, so as to acquire a cellular uplink resource scheduled by a base station, and perform cellular uplink transmission on the cellular uplink resource scheduled by the base station.

In a possible embodiment of the present disclosure, the processor 900 is further configured to read the program stored in the memory 910, so as to acquire a D2D link transmission resource scheduled by the base station, and perform D2D link transmission on the D2D link transmission resource scheduled by the base station.

In a possible embodiment of the present disclosure, the processor 900 is further configured to read the program stored in the memory 910, so as to select a resource from a D2D link transmission resource pool configured by the base station for itself in accordance with acquired information about a time-domain resource of a D2D link transmission resource pool of the remote UE, and perform the D2D link transmission on the selected resource.

In a possible embodiment of the present disclosure, in the case of acquiring the information about the time-domain resource of the D2D link transmission resource pool of the remote UE, the processor 900 is further configured to read the program stored in the memory 910, so as to: determine the D2D link transmission resource pool for the remote UE, the D2D link transmission resource pool at least including the information about the time-domain resource; or acquire from the base station a notification of the D2D link transmission resource pool configured for the remote UE, and acquire the information about the time-domain resource of the D2D link transmission resource pool of the remote UE in accordance with the notification; or acquire the information about the time-domain resource of the D2D link transmission resource pool of the remote UE in a predefined mode.

In a possible embodiment of the present disclosure, subsequent to the determination of the D2D link transmission resource pool of the remote UE, the processor 900 is further configured to read the program stored in the memory 910, so as to notify the determined D2D link transmission resource pool to the remote UE, and report to the base station the time-domain resource of the D2D link transmission resource pool of the remote UE.

In a possible embodiment of the present disclosure, subsequent to the acquisition of the information about the time-domain resource of the D2D link transmission resource pool of the remote UE in a predefined mode, the processor 900 is further configured to read the program stored in the memory 910, so as to report to the base station the time-domain resource of the D2D link transmission resource pool of the remote UE.

In a possible embodiment of the present disclosure, subsequent to the acquisition of the notification of the D2D link transmission resource pool configured for the remote UE from the base station, the processor 900 is further configured to read the program stored in the memory 910, so as to forward the notification to the remote UE.

In a possible embodiment of the present disclosure, the processor 900 is further configured to read the program stored in the memory 910, so as to notify identification information of the relay UE to the remote UE.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to magnetic-disk memory, Compact Disc-Read Only Memory (CD-ROM) and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

## Claims

1. A resource coordination method implemented by a network side device, comprising:
acquiring information about a time-domain resource of a Device-to-Device, D2D, link transmission resource pool of a remote User Equipment, UE, (100); and
determining a relay transmission resource for a relay UE corresponding to the remote UE in accordance with the information about the time-domain resource (110); the step of determining the relay transmission resource for the relay UE corresponding to the remote UE in accordance with the information about the time-domain resource (110) comprises:
in the case that a cellular uplink resource needs to be scheduled for the relay UE, scheduling the cellular uplink resource for the relay UE in accordance with the information about the time-domain resource;
in the case that a D2D link transmission resource needs to be scheduled for the relay UE, scheduling the D2D link transmission resource for the relay UE in accordance with the information about the time-domain resource; or
configuring the D2D link transmission resource pool for the relay UE in accordance with the information about the time-domain resource, and notifying a configuration of the D2D link transmission resource pool of the relay UE to the relay UE,
the step of acquiring the information about the time-domain resource of the D2D link transmission resource pool of the remote UE (100) comprises:
acquiring the information about the time-domain resource of the D2D link transmission resource pool of the remote UE in a predefined mode; or
acquiring the information about the time-domain resource of the D2D link transmission resource pool of the remote UE in a mode of reporting by the relay UE; or
configuring the D2D link transmission resource pool for the remote UE, wherein the D2D link transmission resource pool configured for the remote UE comprises at least the information about the time-domain resource.

2. The resource coordination method according to claim 1, wherein the step of configuring the D2D link transmission resource pool for the remote UE comprises:
configuring at least one of preconfigured D2D communication resource pools and/or at least one of preconfigured D2D discovery resource pools of the remote UE as the D2D link transmission resource pool of the remote UE.

3. The resource coordination method according to claim 1, wherein
the cellular uplink resource scheduled for the relay UE does not overlap a resource in the D2D link transmission resource pool of the remote UE in a time domain; and/or
the D2D link transmission resource scheduled for the relay UE does not overlap the resource in the D2D link transmission resource pool of the remote UE in the time domain.

4. A resource coordination method implemented by a relay UE, comprising:
acquiring a relay transmission resource, wherein the relay transmission resource is determined in accordance with information about a time-domain resource of a D2D link transmission resource pool of a remote UE (200); and
performing relay transmission through the relay transmission resource (210);
wherein the step of acquiring the relay transmission resource comprises:
acquiring a cellular uplink resource scheduled by a base station; and performing cellular uplink transmission on the cellular uplink resource scheduled by the base station;
acquiring the D2D link transmission resource scheduled by a base station; and the step of performing the relay transmission through the relay transmission resource comprises: performing D2D link transmission on the D2D link transmission resource scheduled by the base station; or
selecting a resource from a D2D link transmission resource pool configured by the base station for itself in accordance with acquired information about the time-domain resource of the D2D link transmission resource pool of the remote UE; and the step of performing the relay transmission through the relay transmission resource comprises: performing the D2D link transmission on the selected resource, the resource coordination method further comprises acquiring the information about the time-domain resource of the D2D link transmission resource pool of the remote UE through:
determining the D2D link transmission resource pool for the remote UE, wherein the determined D2D link transmission resource pool of the remote UE comprises at least the information about the time-domain resource; or
acquiring from the base station a notification of the D2D link transmission resource pool configured for the remote UE, and acquiring the information about the time-domain resource of the D2D link transmission resource pool of the remote UE in accordance with the notification; or
acquiring the information about the time-domain resource of the D2D link transmission resource pool of the remote UE in a predefined mode.

5. The resource coordination method according to claim 4, wherein subsequent to the step of determining the D2D link transmission resource pool for the remote UE, the resource coordination method further comprises:
notifying the determined D2D link transmission resource pool of the remote UE to the remote UE.

6. The resource coordination method according to claim 4, wherein subsequent to the step of determining the D2D link transmission resource pool for the remote UE, or subsequent to the step of acquiring the information about the time-domain resource of the D2D link transmission resource pool of the remote UE in the predefined mode, the resource coordination method further comprises:
reporting to the base station the information about the time-domain resource of the D2D link transmission resource pool of the remote UE.

7. The resource coordination method according to claim 4, wherein subsequent to the step of acquiring from the base station the notification of the D2D link transmission resource pool configured for the remote UE, the resource coordination method further comprises:
forwarding the notification to the remote UE.

8. The resource coordination method according to claim 7, wherein in the case of forwarding the notification to the remote UE, the resource coordination method further comprises:
notifying identification information of the relay UE to the remote UE.

9. The resource coordination method according to any one of claims 4 to 8, wherein the resource selected from the D2D link transmission resource pool configured by a base station for itself does not overlap the D2D link transmission resource used by the remote UE in a time domain.

10. A resource coordination device in a network side device, comprising:
a remote transmission resource pool acquisition module (601) configured to acquire information about a time-domain resource of a D2D link transmission resource pool of a remote UE; and
a relay transmission resource determination module (602) configured to determine a relay transmission resource for a relay UE corresponding to the remote UE in accordance with the information about the time-domain resource;
the relay transmission resource determination module (602) is further configured to:
in the case that a cellular uplink resource needs to be scheduled for the relay UE, schedule the cellular uplink resource for the relay UE in accordance with the information about the time-domain resource;
in the case that a D2D link transmission resource needs to be scheduled for the relay UE, schedule the D2D link transmission resource for the relay UE in accordance with the information about the time-domain resource; or
configure the D2D link transmission resource pool for the relay UE in accordance with the information about the time-domain resource, and notify a configuration of the D2D link transmission resource pool of the relay UE to the relay UE,
the remote transmission resource pool acquisition module (601) is further configured to:
acquire the information about the time-domain resource of the D2D link transmission resource pool of the remote UE in a predefined mode; or
acquire the information about the time-domain resource of the D2D link transmission resource pool of the remote UE in a mode of reporting by the relay UE; or
configure the D2D link transmission resource pool for the remote UE, wherein the D2D link transmission resource pool configured for the remote UE comprises at least the information about the time-domain resource.

11. A resource coordination device in a UE, wherein the resource coordination device comprises:
a relay transmission resource acquisition module (801) configured to acquire a relay transmission resource, wherein the relay transmission resource is determined in accordance with information about a time-domain resource of a relay transmission resource pool of a remote UE; and
a relay transmission module (802) configured to perform relay transmission through the relay transmission resource,
wherein the relay transmission resource acquisition module (801) is further configured to acquire a cellular uplink resource scheduled by a base station; and the relay transmission module (802) is further configured to perform cellular uplink transmission on the cellular uplink resource scheduled by the base station;
the relay transmission resource acquisition module (801) is further configured to acquire a D2D link transmission resource scheduled by a base station; and the relay transmission module (802) is further configured to perform D2D link transmission on the D2D link transmission resource scheduled by the base station; or
the relay transmission resource acquisition module (801) is further configured to select a resource from a D2D link transmission resource pool configured by the base station for itself in accordance with acquired information about the time-domain resource of the D2D link transmission resource pool of the remote UE; and the relay transmission module (802) is further configured to perform the D2D link transmission on the selected resource,
the resource coordination device further comprises a remote transmission resource pool acquisition module (601) configured to:
determine the D2D link transmission resource pool for the remote UE, wherein the determined D2D link transmission resource pool of the remote UE comprises at least the information about the time-domain resource; or
acquire from the base station a notification of the D2D link transmission resource pool configured for the remote UE, and acquire the information about the time-domain resource of the D2D link transmission resource pool of the remote UE in accordance with the notification; or
acquire the information about the time-domain resource of the D2D link transmission resource pool of the remote UE in a predefined mode.

## Patentansprüche

1. Ein Verfahren zur Koordinierung von Ressourcen, wobei das Verfahren von einem netzseitigen Gerät durchgeführt wird und wobei das Verfahren die folgenden Schritte umfasst
Erfassen von Informationen über eine Zeitbereichsressource eines Satzes von Gerät-zu-Gerät-, D2D-, Übertragungsressourcen einer entfernten Benutzerausrüstung, UE, (100); und
Bestimmen einer Relaisübertragungsressource für ein Relais-UE, das dem entfernten UE entspricht, basierend auf Informationen über die Ressource in der Zeitdomäne (110);
der Schritt des Bestimmens der Relaisübertragungsressource für das Relais-UE, das dem entfernten UE entspricht, basierend auf den Informationen über die Zeitdomänenressource (110), die folgenden Schritte umfasst:
falls es notwendig ist, eine zelluläre Uplink-Ressource für das Relais-UE zu programmieren, Programmieren der zellulären Uplink-Ressource für das Relais-UE gemäß den Informationen über die Zeitbereichsressource (110)
falls es notwendig ist, eine D2D-Streckenübertragungsressource für das Relais-UE zu programmieren, die D2D-Streckenübertragungsressource für das Relais-UE gemäß den Informationen über die Ressource im Zeitbereich zu programmieren; oder
Konfigurieren des D2D-Verbindungsübertragungsressourcensatzes für das Relais-UE gemäß den Informationen über die Zeitdomänenressource und Melden einer Konfiguration des D2D-Verbindungsübertragungsressourcensatzes des Relais-UE an das Relais-UE,
der Schritt des Erfassens der Informationen über die Zeitbereichsressource des D2D-Streckenübertragungsressourcensatzes des entfernten UE (100) die folgenden Schritte umfasst Erfassen der Informationen über die Ressource im Zeitbereich der D2D-Verbindungsübertragungsressourcen des entfernten UE in einem vordefinierten Modus; oder
Erfassen von Informationen über die Ressource im Zeitbereich der D2D-Verbindungsübertragungsressource des entfernten UE, die von dem Relais-UE in einem Signalisierungsmodus eingestellt wurde; oder
Konfigurieren des D2D-Verbindungsübertragungsressourcensatzes für das entfernte UE, wobei der für das entfernte UE konfigurierte D2D-Verbindungsübertragungsressourcensatz mindestens die Informationen über die Ressource in der Zeitdomäne enthält.

2. Das Verfahren zur Koordinierung von Ressourcen nach dem vorhergehende Anspruch 1, wobei ferner der Schritt des Konfigurierens des D2D-Link-Übertragungsressourcensatzes für das entfernte UE-Gerät den folgenden Schritt ferner umfasst:
Ein Konfigurieren von mindestens einem einer Vielzahl von vorkonfigurierten D2D-Kommunikationsressourcensätzen und/oder mindestens einem einer Vielzahl von D2D-Ermittlungsressourcensätzen des entfernten UE-Geräts als D2D-Verbindungsübertragungsressourcensatz(e) des entfernten UE-Geräts.

3. Das Verfahren zur Koordinierung von Ressourcen nach dem vorhergehende Anspruch 1, wobei das Verfahren ferner umfasst:
die zelluläre Uplink-Ressource, die für das Relais-UE geplant ist, sich nicht mit einer Ressource des D2D-Link-Übertragungsressourcensatzes des entfernten UE in einem Zeitbereich überschneidet; und/oder
die für das Relais-UE vorgesehene D2D-Uplink-Ressource überschneidet sich nicht mit der D2D-Uplink-Ressourcengruppe des entfernten UE im Zeitbereich.

4. Ein Verfahren zur Koordinierung von Ressourcen, wobei das Verfahren von einem Relais-UE implementiert wird und wobei das Verfahren ferner die folgenden Schritte umfasst:
Erfassen einer Relaisübertragungsressource, wobei die Relaisübertragungsressource auf der Grundlage von Informationen über eine Zeitdomänenressource eines Satzes von D2D-Verbindungsübertragungsressourcen einer entfernten UE-Ausrüstung (200) bestimmt wird; und
Durchführung einer Relaisübertragung über die Relaisübertragungsressource (210);
wobei der Schritt des Erfassens der Relaisübertragungsressource die folgenden Schritte umfasst:
Erfassen einer zellularen Uplink-Ressource, die von einer Basisstation programmiert wird; und Durchführen einer zellularen Uplink-Übertragung über die zellulare Uplink-Ressource, die von der Basisstation programmiert wird;
Erfassen der D2D-Verbindungsübertragungsressource, die von einer Basisstation programmiert wird; und der Schritt des Durchführens der Relaisübertragung über die Relaisübertragungsressource umfasst den Schritt: Durchführen der D2D-Verbindungsübertragung auf der D2D-Verbindungsübertragungsressource, die von der Basisstation programmiert wird; oder
Auswählen einer Ressource aus einem Satz von D2D-Verbindungsübertragungsressourcen, die von der Basisstation konfiguriert werden, auf der Grundlage von Informationen, die über die Ressource in der Zeitdomäne des Satzes von D2D-Verbindungsübertragungsressourcen der entfernten UE-Ausrüstung erfasst werden; und der Schritt des Durchführens der Relaisübertragung über die Relaisübertragungsressource umfasst den Schritt: Durchführen der D2D-Verbindungsübertragung auf der ausgewählten Ressource;
wobei ferner das Verfahren zur Koordinierung von Ressourcen umfasst außerdem die folgenden Schritte:
Ein Erfassen der Informationen über die Ressource im Zeitbereich des D2D-Link-Übertragungsressourcensatzes des entfernten UE-Geräts mittels der folgenden Schritte:
Ein Bestimmen des D2D-Verbindungsübertragungsressourcensatzes für das entfernte UE, wobei der bestimmte D2D-Verbindungsübertragungsressourcensatz des entfernten UE zumindest die Informationen über die Zeitdomänenressource enthält; oder
Ein Erfassen einer Benachrichtigung von der Basisstation über den Satz von D2D-Übertragungsressourcen, die für den entfernten UE konfiguriert sind, und Erfassen der Information über die Ressource in der Zeitdomäne des Satzes von D2D-Übertragungsressourcen des entfernten UE gemäß der Benachrichtigung; oder
die Informationen über die Ressource im Zeitbereich der D2D-Streckenübertragungsressourcen des entfernten UE in einem vordefinierten Modus erfassen.

5. Das Verfahren zur Koordinierung von Ressourcen nach dem vorhergehenden Anspruch 4, wobei das RessourcenKoordinationsverfahren nach dem Schritt des Bestimmens des D2D-Link-Übertragungsressourcensatzes für das entfernte UE-Gerät weiterhin ferner den folgenden Schritt umfasst:
Eine Mitteilung des ermittelten Satzes von D2D-Verbindungsübertragungsressourcen von der entfernten UE-Einrichtung an die entfernte UE-Einrichtung.

6. Das Verfahren zur Koordinierung von Ressourcen nach dem vorhergehenden Anspruch 4, wobei das Ressourcenkoordinationsverfahren nach dem Schritt des Bestimmens des Satzes von D2D-Verbindungsübertragungsressourcen für das entfernte UE oder nach dem Schritt des Erfassens der Informationen über die Zeitdomänenressource des Satzes von D2D-Verbindungsübertragungsressourcen des entfernten UE in dem vordefinierten Modus weiterhin den Schritt umfasst:
Melden der Informationen über die Ressource im Zeitbereich des D2D-Link-Übertragungsressourcensatzes des entfernten UE-Geräts an die Basisstation.

7. Das Verfahren zur Koordinierung von Ressourcen nach dem vorhergehenden Anspruch 4, wobei das RessourcenKoordinationsverfahren nach dem Schritt des Erfassens der Benachrichtigung über den für die entfernte UE-Ausrüstung konfigurierten D2D-Link-Übertragungsressourcensatz von der Basisstation weiterhin den Schritt umfasst:
erneute Übermittlung der Meldung an das entfernte UE.

8. Das Verfahren zur Koordinierung von Ressourcen nach dem vorhergehenden Anspruch 7, wobei das Ressourcenkoordinationsverfahren im Falle des erneuten Übertragens der Benachrichtigung an das entfernte UE-Gerät ferner den folgenden Schritt umfasst:
Eine Übermittlung von Identifikationsinformationen des Relais-UE-Geräts an das entfernte UE-Gerät.

9. Das Verfahren zur Koordinierung von Ressourcen nach einem der Ansprüche 4 bis 8, wobei die aus dem Satz von D2D-Streckenübertragungsressourcen, die von einer Basisstation konfiguriert werden, ausgewählte Ressource selbst nicht mit der D2D-Streckenübertragungsressource überlappt, die von der entfernten UE-Ausrüstung in einem Zeitbereich verwendet wird.

10. Eine Vorrichtung zur Koordinierung von Ressourcen in einem netzseitigen Gerät, die Folgendes umfasst:
ein Fernübertragungsressourcensatz-Erfassungsmodul (601), das so konfiguriert ist, dass es Informationen über einen Zeitbereichsressourcensatz eines D2D-Verbindungsübertragungsressourcensatzes eines entfernten UE erfasst; und
ein Relaisübertragungsressourcen-Bestimmungsmodul (602), das so konfiguriert ist, dass es eine Relaisübertragungsressource für ein Relais-UE, das dem entfernten UE entspricht, basierend auf den Informationen über die Zeitdomänenressource bestimmt;
das Modul zur Bestimmung der Relaisübertragungsressourcen (602) ist ferner so konfiguriert, dass das Modul zur Bestimmung der Relaisübertragungsressourcen:
in dem Fall, in dem es notwendig ist, eine zelluläre Uplink Ressource für das Relais-UE zu programmieren, Programmieren der zellulären Uplink Ressource für das Relais-UE auf der Grundlage der Informationen über die Ressource im Zeitbereich
falls es notwendig ist, eine D2D-Streckenübertragungsressource für das Relais-UE zu programmieren, die D2D-Streckenübertragungsressource für das Relais-UE gemäß den Informationen über die Ressource im Zeitbereich programmieren; oder
Konfigurieren des D2D-Verbindungsübertragungsressourcensatzes für das Relais-UE gemäß den Informationen über die Ressource in der Zeitdomäne und Melden einer Konfiguration des D2D-Verbindungsübertragungsressourcensatzes des Relais-UE an das Relais-UE,
das Modul (601) zur Erfassung des Fernübertragungsressourcensatzes ist ferner so konfiguriert, dass das Modul:
die Informationen über die Ressource im Zeitbereich der D2D-Verbindungsübertragungsressourcen des entfernten UE in einem vordefinierten Modus erfassen; oder
Erfassen von Informationen über die Ressource im Zeitbereich der D2D-Verbindungsübertragungsressource des entfernten UE, die von dem Relais-UE in einem Signalisierungsmodus eingestellt wurde; oder
Konfigurieren des D2D-Verbindungsübertragungsressourcensatzes für das entfernte UE, wobei der für das entfernte UE konfigurierte D2D-Verbindungsübertragungsressourcensatz mindestens die Informationen über die Ressource in der Zeitdomäne enthält.

11. Eine Ressourcen-Koordinationsvorrichtung in einem User Equipment, UE, wobei die Ressourcen-Koordinationsvorrichtung ferner umfasst:
- ein Relaisübertragungsressourcen-Erfassungsmodul (801), das konfiguriert ist, um eine Relaisübertragungsressource zu erfassen, wobei die Relaisübertragungsressource auf der Grundlage von Informationen über eine Zeitdomänenressource eines Satzes von Relaisübertragungsressourcen eines entfernten UE bestimmt wird; und
- ein Relaisübertragungsmodul (802), das so konfiguriert ist, dass es eine Relaisübertragung über die Relaisübertragungsressource durchführt,
wobei das Relaisübertragungsressourcen-Erfassungsmodul (801) ferner in der Art und Weise konfiguriert ist, dass es eine zelluläre Uplink Ressource erfasst, die von einer Basisstation programmiert wird; und das Relaisübertragungsmodul (802) ferner so konfiguriert ist, dass es eine zelluläre Uplink-Übertragung über die zelluläre Uplink Ressource durchführt, die von der Basisstation programmiert wird; und
das Relaisübertragungsressourcen-Erfassungsmodul (801) ferner in der Art und Weise konfiguriert ist, dass es eine D2D-Verbindungsübertragungsressource erfasst, die von einer Basisstation programmiert wird; und das Relaisübertragungsmodul (802) ferner so konfiguriert ist, dass es eine D2D-Verbindungsübertragung auf der D2D-Verbindungsübertragungsressource durchführt, die von der Basisstation programmiert wird; oder
das Relaissende-Ressourcen-Erfassungsmodul (801) ist ferner in der Art und Weise konfiguriert, dass es eine Ressource aus einem Satz von D2D-Sende-Ressourcen, die von der Basisstation konfiguriert wurden, selbständig auf der Grundlage von Informationen auswählt, die über die Ressource in der Zeitdomäne des Satzes von D2D-Sende-Ressourcen des entfernten UE erfasst wurden; und das Relaissende-Modul (802) ist ferner so konfiguriert, dass es die D2D-Übertragung auf der ausgewählten Ressource durchführt,
die Ressourcenkoordinierungsvorrichtung ferner ein Modul (601) zur Erfassung eines Fernübertragungsressourcensatzes umfasst, das ferner in der Art und Weise konfiguriert ist, dass das Modul folgende Schritte durchführt:
Ein Bestimmen des Satzes von D2D-Übertragungsressourcen für das entfernte UE, wobei der bestimmte Satz von D2D-Übertragungsressourcen des entfernten UE zumindest die Informationen über die Ressource im Zeitbereich enthält; oder
Ein Erfassen einer Benachrichtigung von der Basisstation über den Satz von D2D-Übertragungsressourcen, die für den entfernten UE konfiguriert sind, und Erfassen der Information über die Ressource in der Zeitdomäne des Satzes von D2D-Übertragungsressourcen des entfernten UE gemäß der Benachrichtigung; oder
Ein Erfassen der Informationen über die Ressource im Zeitbereich der D2D-Streckenübertragungsressourcen des entfernten UE in einem vordefinierten Modus.

## Revendications

1. Procédé de coordination de ressources mis en œuvre par un dispositif coté réseau, comprenant les étapes suivantes :
acquérir des informations au sujet d'une ressource dans le domaine temporel d'un ensemble de ressources de transmission sur liaison de dispositif à dispositif, D2D *(device to device)* d'un équipement d'utilisateur, UE *(user equipment)* distant (100) ; et
déterminer une ressource de transmission par relais pour un équipement UE relais correspondant à l'équipement UE distant, en fonction des informations au sujet de la ressource dans le domaine temporel (110) ;
l'étape de détermination de la ressource de transmission par relais pour l'équipement UE relais correspondant à l'équipement UE distant, en fonction des informations au sujet de la ressource dans le domaine temporel (110), comprend les étapes suivantes :
dans le cas où il est nécessaire de programmer une ressource de liaison montante cellulaire pour l'équipement UE relais, programmer la ressource de liaison montante cellulaire pour l'équipement UE relais en fonction des informations au sujet de la ressource dans le domaine temporel ;
dans le cas où il est nécessaire de programmer une ressource de transmission sur liaison D2D pour l'équipement UE relais, programmer la ressource de transmission sur liaison D2D pour l'équipement UE relais en fonction des informations au sujet de la ressource dans le domaine temporel ; ou
configurer l'ensemble de ressources de transmission sur liaison D2D pour l'équipement UE relais en fonction des informations au sujet de la ressource dans le domaine temporel, et notifier une configuration de l'ensemble de ressources de transmission sur liaison D2D de l'équipement UE relais à l'équipement UE relais,
l'étape d'acquisition des informations au sujet de la ressource dans le domaine temporel de l'ensemble de ressources de transmission sur liaison D2D de l'équipement UE distant (100) comprend les étapes suivantes :
acquérir les informations au sujet de la ressource dans le domaine temporel de l'ensemble de ressources de transmission sur liaison D2D de l'équipement UE distant dans un mode prédéfini ; ou
acquérir les informations au sujet de la ressource dans le domaine temporel de l'ensemble de ressources de transmission sur liaison D2D de l'équipement UE distant dans un mode de signalisation par l'équipement UE relais ; ou
configurer l'ensemble de ressources de transmission sur liaison D2D pour l'équipement UE distant, dans lequel l'ensemble de ressources de transmission sur liaison D2D configuré pour l'équipement UE distant comprend au moins les informations au sujet de la ressource dans le domaine temporel.

2. Procédé de coordination de ressources, selon la revendication 1, dans lequel l'étape de configuration de l'ensemble de ressources de transmission sur liaison D2D pour l'équipement UE distant comprend l'étape suivante :
configurer au moins l'un de plusieurs ensembles de ressources de communication D2D préconfigurés et/ou au moins l'un de plusieurs ensembles de ressources de découverte D2D de l'équipement UE distant, en tant qu'ensemble(s) de ressources de transmission sur liaison D2D de l'équipement UE distant.

3. Procédé de coordination de ressources, selon la revendication 1, dans lequel :
la ressource de liaison montante cellulaire, programmée pour l'équipement UE relais, ne chevauche pas une ressource de l'ensemble de ressources de transmission sur liaison D2D de l'équipement UE distant dans un domaine temporel ; et/ou la ressource de transmission sur liaison D2D, programmée pour l'équipement UE relais, ne chevauche pas la ressource de l'ensemble de ressources de transmission sur liaison D2D de l'équipement UE distant dans le domaine temporel.

4. Procédé de coordination de ressources, mis en œuvre par un équipement UE relais, comprenant les étapes suivantes :
acquérir une ressource de transmission par relais, dans lequel la ressource de transmission par relais est déterminée en fonction d'informations au sujet d'une ressource dans le domaine temporel d'un ensemble de ressources de transmission sur liaison D2D d'un équipement UE distant (200) ; et
réaliser une transmission par relais par le biais de la ressource de transmission par relais (210) ;
dans lequel l'étape d'acquisition de la ressource de transmission par relais comprend les étapes suivantes :
acquérir une ressource de liaison montante cellulaire, programmée par une station de base; et réaliser une transmission sur liaison montante cellulaire sur la ressource de liaison montante cellulaire, programmée par la station de base ;
acquérir la ressource de transmission sur liaison D2D, programmée par une station de base; et l'étape de réalisation de la transmission par relais par le biais de la ressource de transmission par relais comprend l'étape suivante : réaliser la transmission sur liaison D2D sur la ressource de transmission sur liaison D2D, programmée par la station de base; ou
sélectionner une ressource dans un ensemble de ressources de transmission sur liaison D2D, configuré par la station de base, d'elle-même, en fonction d'informations acquises au sujet de la ressource dans le domaine temporel de l'ensemble de ressources de transmission sur liaison D2D de l'équipement UE distant ; et l'étape de réalisation de la transmission par relais par le biais de la ressource de transmission par relais comprend l'étape suivante : réaliser la transmission sur liaison D2D sur la ressource sélectionnée, le procédé de coordination de ressources comprend en outre les étapes suivantes :
acquérir les informations au sujet de la ressource dans le domaine temporel de l'ensemble de ressources de transmission sur liaison D2D de l'équipement UE distant au moyen des étapes suivantes :
déterminer l'ensemble de ressources de transmission sur liaison D2D pour l'équipement UE distant, dans lequel l'ensemble déterminé de ressources de transmission sur liaison D2D de l'équipement UE distant comprend au moins les informations au sujet de la ressource dans le domaine temporel ; ou
acquérir à partir de la station de base une notification de l'ensemble de ressources de transmission sur liaison D2D configuré pour l'équipement UE distant, et acquérir les informations au sujet de la ressource dans le domaine temporel de l'ensemble de ressources de transmission sur liaison D2D de l'équipement UE distant en fonction de la notification ; ou
acquérir les informations au sujet de la ressource dans le domaine temporel de l'ensemble de ressources de transmission sur liaison D2D de l'équipement UE distant dans un mode prédéfini.

5. Procédé de coordination de ressources, selon la revendication 4, dans lequel, à la suite de l'étape de détermination de l'ensemble de ressources de transmission sur liaison D2D pour l'équipement UE distant, le procédé de coordination de ressources comprend en outre l'étape suivante :
notifier l'ensemble déterminé de ressources de transmission sur liaison D2D de l'équipement UE distant à l'équipement UE distant.

6. Procédé de coordination de ressources, selon la revendication 4, dans lequel, à la suite de l'étape de détermination de l'ensemble de ressources de transmission sur liaison D2D pour l'équipement UE distant, ou à la suite de l'étape d'acquisition des informations au sujet de la ressource dans le domaine temporel de l'ensemble de ressources de transmission sur liaison D2D de l'équipement UE distant dans le mode prédéfini, le procédé de coordination de ressources comprend en outre l'étape suivante :
signaler à la station de base les informations au sujet de la ressource dans le domaine temporel de l'ensemble de ressources de transmission sur liaison D2D de l'équipement UE distant.

7. Procédé de coordination de ressources, selon la revendication 4, dans lequel, à la suite de l'étape d'acquisition, à partir de la station de base, de la notification de l'ensemble de ressources de transmission sur liaison D2D configuré pour l'équipement UE distant, le procédé de coordination de ressources comprend en outre l'étape suivante :
retransmettre la notification à l'équipement UE distant.

8. Procédé de coordination de ressources, selon la revendication 7, dans lequel, en cas de retransmission de la notification à l'équipement UE distant, le procédé de coordination de ressources comprend en outre l'étape suivante :
notifier des informations d'identification de l'équipement UE relais à l'équipement UE distant.

9. Procédé de coordination de ressources, selon l'une quelconque des revendications 4 à 8, dans lequel la ressource sélectionnée dans l'ensemble de ressources de transmission sur liaison D2D configuré par une station de base, d'elle-même, ne chevauche pas la ressource de transmission sur liaison D2D utilisée par l'équipement UE distant dans un domaine temporel.

10. Dispositif de coordination de ressources dans un dispositif côté réseau, comprenant :
un module d'acquisition d'ensemble de ressources de transmission distantes (601) configuré pour acquérir des informations au sujet d'une ressource dans le domaine temporel d'un ensemble de ressources de transmission sur liaison D2D d'un équipement UE distant ; et
un module de détermination de ressource de transmission par relais (602) configuré pour déterminer une ressource de transmission par relais pour un équipement UE relais correspondant à l'équipement UE distant, en fonction des informations au sujet de la ressource dans le domaine temporel ;
le module de détermination de ressource de transmission par relais (602) est configuré en outre pour :
dans le cas où il est nécessaire de programmer une ressource de liaison montante cellulaire pour l'équipement UE relais, programmer la ressource de liaison montante cellulaire pour l'équipement UE relais en fonction des informations au sujet de la ressource dans le domaine temporel ;
dans le cas où il est nécessaire de programmer une ressource de transmission sur liaison D2D pour l'équipement UE relais, programmer la ressource de transmission sur liaison D2D pour l'équipement UE relais en fonction des informations au sujet de la ressource dans le domaine temporel ; ou
configurer l'ensemble de ressources de transmission sur liaison D2D pour l'équipement UE relais en fonction des informations au sujet de la ressource dans le domaine temporel, et notifier une configuration de l'ensemble de ressources de transmission sur liaison D2D de l'équipement UE relais à l'équipement UE relais,
le module d'acquisition d'ensemble de ressources de transmission distantes (601) est configuré en outre pour :
acquérir les informations au sujet de la ressource dans le domaine temporel de l'ensemble de ressources de transmission sur liaison D2D de l'équipement UE distant dans un mode prédéfini ; ou
acquérir les informations au sujet de la ressource dans le domaine temporel de l'ensemble de ressources de transmission sur liaison D2D de l'équipement UE distant dans un mode de signalisation par l'équipement UE relais ; ou
configurer l'ensemble de ressources de transmission sur liaison D2D pour l'équipement UE distant, dans lequel l'ensemble de ressources de transmission sur liaison D2D configuré pour l'équipement UE distant comprend au moins les informations au sujet de la ressource dans le domaine temporel.

11. Dispositif de coordination de ressources dans un équipement UE, dans lequel le dispositif de coordination de ressources comprend :
un module d'acquisition de ressource de transmission par relais (801) configuré pour acquérir une ressource de transmission par relais, dans lequel la ressource de transmission par relais est déterminée en fonction d'informations au sujet d'une ressource dans le domaine temporel d'un ensemble de ressources de transmission par relais d'un équipement UE distant ; et
un module de transmission par relais (802) configuré pour réaliser une transmission par relais par le biais de la ressource de transmission par relais,
dans lequel le module d'acquisition de ressource de transmission par relais (801) est configuré en outre pour acquérir une ressource de liaison montante cellulaire, programmée par une station de base; et le module de transmission par relais (802) est configuré en outre pour réaliser une transmission sur liaison montante cellulaire sur la ressource de liaison montante cellulaire, programmée par la station de base ;
le module d'acquisition de ressource de transmission par relais (801) est configuré en outre pour acquérir une ressource de transmission sur liaison D2D, programmée par une station de base; et le module de transmission par relais (802) est configuré en outre pour réaliser une transmission sur liaison D2D sur la ressource de transmission sur liaison D2D, programmée par la station de base; ou
le module d'acquisition de ressource de transmission par relais (801) est configuré en outre pour sélectionner une ressource dans un ensemble de ressources de transmission sur liaison D2D configuré par la station de base, d'elle-même, en fonction d'informations acquises au sujet de la ressource dans le domaine temporel de l'ensemble de ressources de transmission sur liaison D2D de l'équipement UE distant ; et le module de transmission par relais (802) est configuré en outre pour réaliser la transmission sur liaison D2D sur la ressource sélectionnée,
le dispositif de coordination de ressources comprend en outre un module d'acquisition d'ensemble de ressources de transmission distantes (601) configuré pour :
déterminer l'ensemble de ressources de transmission sur liaison D2D pour l'équipement UE distant, dans lequel l'ensemble déterminé de ressources de transmission sur liaison D2D de l'équipement UE distant comprend au moins les informations au sujet de la ressource dans le domaine temporel ; ou
acquérir à partir de la station de base une notification de l'ensemble de ressources de transmission sur liaison D2D configuré pour l'équipement UE distant, et acquérir les informations au sujet de la ressource dans le domaine temporel de l'ensemble de ressources de transmission sur liaison D2D de l'équipement UE distant en fonction de la notification ; ou
acquérir les informations au sujet de la ressource dans le domaine temporel de l'ensemble de ressources de transmission sur liaison D2D de l'équipement UE distant dans un mode prédéfini.
